# EUROPEAN PATENT APPLICATION

(11) **EP 4 621 259 A1**
(43) Date of publication of application: **24.09.2025**
(21) Application number: 23891574.8
(22) Date of filing: 14.11.2023
(51) Int. Cl.: F16F 3/02, F16F 1/18, F16F 3/00

(54) **STRUCTURE AND METHOD FOR MANUFACTURING SAME**

(30) Priority: 18.11.2022 JP 2022185303; 20.03.2023 JP 2023043785
(71) Applicant: Nature Architects Inc., Tokyo 103-0011 (JP)
(72) Inventor: SUTO Kai, Tokyo 103-0011 (JP); TANIMICHI Kotaro, Tokyo 103-0011 (JP); YAMAMURA Satoshi, Tokyo 103-0011 (JP); NATSUME Hiroaki, Tokyo 103-0011 (JP); SHINTANI Kunitaka, Tokyo 103-0011 (JP)
(74) Representative: Kuhnen & Wacker Patent- und Rechtsanwaltsbüro PartG mbB
(86) International application number: PCT/JP2023/040924
(87) International publication number: WO 2024/106427

(57) **Abstract**

According to one embodiment of the present disclosure, a structure includes: a first elastic member extending along a predetermined direction and having first end portions in the predetermined direction and a first intermediate portion located between the first end portions; and a second elastic member disposed on one surface side of the first elastic member, the second elastic member having second end portions in the predetermined direction, the second end portions being respectively connected to the first end portions, and a second intermediate portion located between the second end portions, with at least part of the second intermediate portion having a convex shape in a direction away from the first intermediate portion.

## Description

### Technical Field

The present disclosure relates to a structure and a method for manufacturing the same.

### Background

Patent Document 1 discloses a structure disposed between a first and second pressed bodies that face each other. The structure is formed from a single strip-shaped member and includes: a base portion having a curved main surface; two extending portions respectively extending from both ends of the base portion and curving in a direction opposite to the direction of curvature of the base portion; and two curved portions respectively extending from the ends of the two extending portions, on the side opposite to the side connected to the base portion, the two curved portions curving in a direction opposite to the direction of curvature of the extending portions.

### Citation List

### Patent Literature

PTL1: Japanese Patent No. 6866396

### Summary

In the structure of Patent Document 1, the energy applied by a pressing force exerted to bring the first and second pressed bodies toward each other is stored as strain energy associated with the strain generated within the base portion due to bending deformation caused by the pressing force. This stored strain energy generates a reaction force opposing the pressing force.

Generally, when a plate-shaped member undergoes bending deformation, the compressive strain within the plate-shaped member increases as it moves from the neutral axis toward the inner peripheral side of the bending deformation, while the tensile strain increases as it moves from the neutral axis toward the outer peripheral side. Near the neutral axis, the strain remains small. Accordingly, when viewed as a whole, the strain energy stored during bending deformation is relatively small compared to the maximum potential strain energy that the plate-shaped member is inherently capable of storing.

Accordingly, the strain energy that the base portion of the structure disclosed in Patent Document 1 can store is relatively small compared to its maximum potential strain energy. Therefore, it is necessary to provide a structure that enables the stored strain energy to approach its maximum potential strain energy.

According to one aspect of the present disclosure, a structure includes: a first elastic member extending along a predetermined direction and having first end portions in the predetermined direction and a first intermediate portion located between the first end portions; and a second elastic member disposed on one surface side of the first elastic member, the second elastic member having second end portions in the predetermined direction, the second end portions being respectively connected to the first end portions, and a second intermediate portion located between the second end portions, with at least part of the second intermediate portion having a convex shape in a direction away from the first intermediate portion. When a pressing force is applied to the structure to bring the second intermediate portion closer to the first intermediate portion, the second elastic member undergoes bending deformation, thereby generating compressive stress in the second elastic member and tensile stress in the first elastic member.

The other features and advantages of the present disclosure may be appreciated from the following description and the accompanying drawings, which are illustrative and non-limiting.

### Brief Description of Drawings

Fig. 1 is a perspective view showing a structure of an embodiment of the present disclosure.
Fig. 2 is a front view of the structure shown in Fig. 1.
Fig. 3 is a conceptual diagram showing tensile force applied to the first elastic member of the structure shown in Fig. 1, as well as compressive forces applied to the second and third elastic members, respectively.
Fig. 4 is a manufacturing process diagram showing the manufacturing process of the structure.
Fig. 5 is a manufacturing process diagram showing the manufacturing process of the structure.
Fig. 6 is a schematic diagram showing the relationship between stresses and reaction force, that are generated in the first elastic member and the second and third elastic members when a pressing force is applied to the structure shown in Fig. 1 to sandwich the structure 10 from the shown upper and lower directions.
Fig. 7 is a diagram showing the relationship between displacement and reaction force when a pressing force is applied to sandwich the structure.
Fig. 8 is a diagram showing the relationship between displacement and reaction force when a pressing force is applied to sandwich structures.
Fig. 9 is a diagram showing the relationship between displacement and maximum strain of the second and third elastic members when a pressing force is applied to sandwich the structures.
Fig. 10 is a diagram showing the relationship between displacement and the energy stored in the structures when a pressing force is applied to sandwich the structures.
Fig. 11 is a perspective view showing a structure of a modification.
Fig. 12 is a front view of the structure shown in Fig. 11.
Fig. 13 is a perspective view showing a structure of another modification.
Fig. 14 is a front view of the structure shown in Fig. 13.

### Description of Embodiments

The embodiments of the present disclosure will be described below with reference to the drawings.

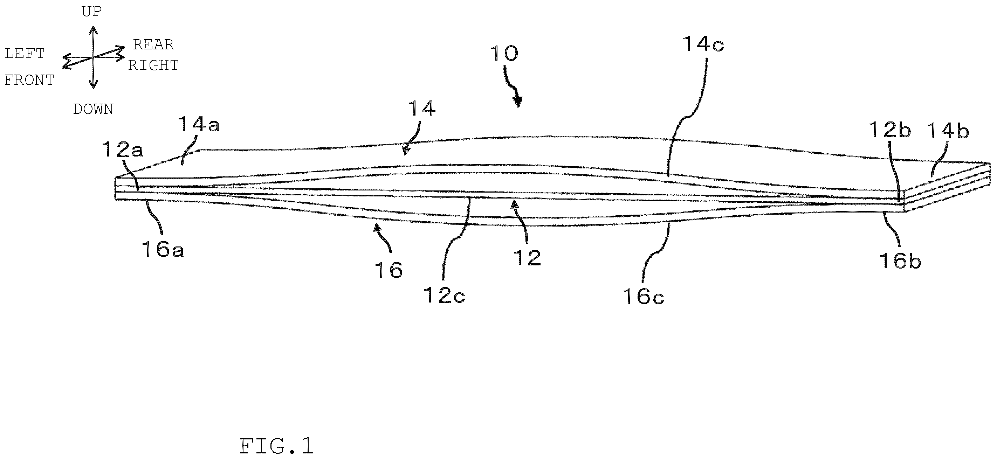

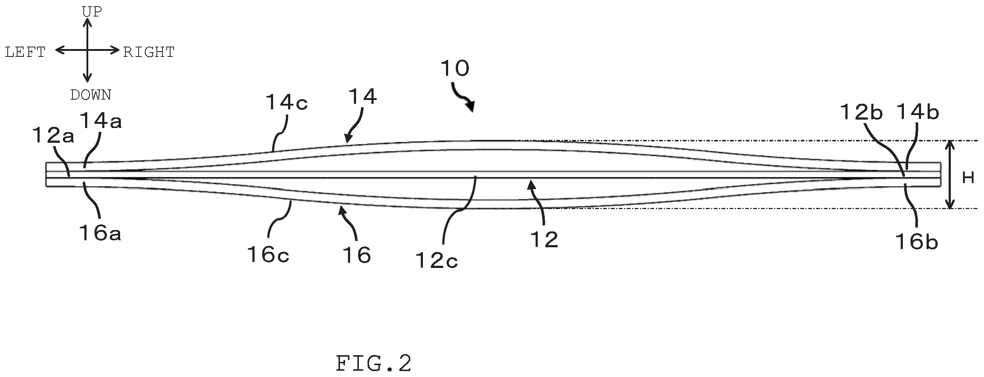

First, the overall configuration of a structure 10 of an embodiment of the present disclosure will be described. Fig. 1 is a perspective view showing the structure of an embodiment of the present disclosure, and Fig. 2 is a front view of the structure shown in Fig. 1.

As shown in Figs. 1 and 2, the structure 10 of the present embodiment includes a rectangular flat plate-shaped first elastic member 12 extending along both the front-rear and left-right directions, a second elastic member 14, with end portions 14a and 14b in the shown left-right direction, connected (fixed) to the upper surface side of the end portions 12a and 12b of the first elastic member 12, in a state where at least part of it is bent into an upward convex shape, and a third elastic member 16, with end portions 16a and 16b in the shown left-right direction, connected (fixed) to the lower surface side of the end portions 12a and 12b of the first elastic member 12, in a state where at least part of it is bent into a downward convex shape.

The intermediate portion 14c of the second elastic member 14, which is the portion between the end portions 14a and 14b, has approximately a shape in which the corners of an inverted V-shape are smoothly rounded (curved) in a predetermined cross-section cut in a predetermined plane extending along the up-down and left-right directions. Specifically, the intermediate portion 14c has a smooth curved shape (specifically, a curved shape formed by combining multiple arcs) in the predetermined cross-section, and as it moves away from the end portions 14a and 14b (toward the center in the left-right direction), it also moves away from the intermediate portion 12c of the first elastic member 12, forming a convex shape in the shown upward direction. The intermediate portion 16c of the third elastic member 16, which is the portion between the end portions 16a and 16b, has approximately a shape in which the corners of a generally V-shape are smoothly rounded (curved) in the predetermined cross-section. Specifically, the intermediate portion 16c has a smooth curved shape (specifically, a curved shape formed by combining multiple arcs) in the predetermined cross-section, and as it moves away from the end portions 16a and 16b (toward the center in the left-right direction), it also moves away from the intermediate portion 12c of the first elastic member 12, forming a convex shape in the shown downward direction.

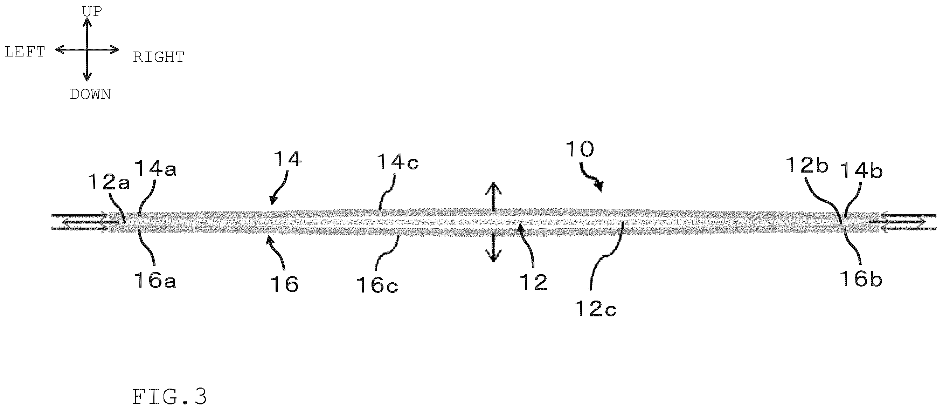

Fig. 3 is a conceptual diagram showing tensile force applied to the first elastic member 12 of the structure 10 shown in Fig. 1, as well as compressive forces applied to the second and third elastic members 14 and 16, respectively.

As shown in Fig. 3, the structure 10 of the present embodiment is configured such that compressive forces are pre-applied to the end portions 14a, 14b, 16a, and 16b of the second and third elastic members 14 and 16, directing them towards each other along the shown left-right direction. As a result, tensile forces are pre-applied to the end portions 12a and 12b of the first elastic member 12, directing them away from each other along the shown left-right direction. In this state, the end portions 14a, 14b, 16a, and 16b of the second and third elastic members 14 and 16 are fixed to the end portions 12a and 12b of the first elastic member 12, respectively. The end portions 14a, 14b, 16a, and 16b of the second and third elastic members 14 and 16 are fixed to the end portions 12a and 12b of the first elastic member 12, with their central portions deformed to bend convexly either upward or downward, as shown in Fig. 1(b), due to the applied compressive forces. The attachment of the end portions 12a and 12b of the first elastic member 12 to the end portions 14a, 14b, 16a, and 16b of the second and third elastic members 14 and 16 can be accomplished using any suitable method, such as welding, riveting, or the like. Thus, in the completed manufacturing state of the structure 10 (as shown in Figs. 1 and 2), compressive forces are applied to the end portions 14a, 14b, 16a, and 16b of the second and third elastic members 14 and 16, directing them towards each other along the shown left-right direction, while tensile forces are applied to the end portions 12a and 12b of the first elastic member 12, directing them away from each other along the shown left-right direction. In other words, prestress is applied to the structure 10.

The first elastic member 12 and the second and third elastic members 14 and 16 may be formed using composite materials such as metal materials, resin materials, rubber materials, carbon fiber reinforced plastic (CFRP), and the like. The materials constituting these members are appropriately selected in accordance with the various requirements such as load-bearing capacity demanded by the structure 10.

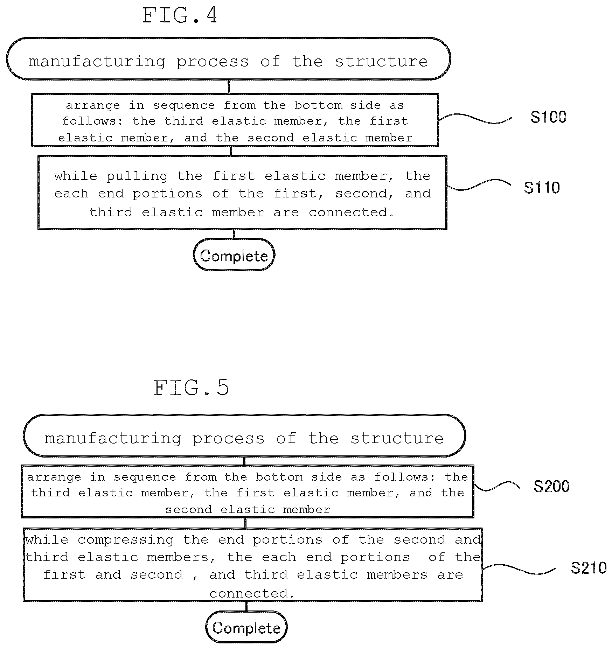

The structure 10 of the present embodiment is manufactured, for example, by the first manufacturing method shown in Fig. 4 or the second manufacturing method shown in Fig. 5. The following provides an explanation in order. Note that the up-down direction, front-rear direction, and left-right direction are the same as those in Figs. 1 and 2.

In the first manufacturing method shown in Fig. 4, the first, second, and third elastic members 12, 14, and 16 are first arranged in sequence from the bottom side as follows: the third elastic member 16, the first elastic member 12, and the second elastic member 14 (Step S100). Next, while pulling the first elastic member 12 along the left-right direction, the end portions 12a and 12b of the first elastic member 12 are connected (fixed) to the end portions 14a and 14b of the second elastic member 14, and to the end portions 16a and 16b of the third elastic member 16 (Step S110). As a result, the structure 10 is completed. In the completed manufacturing state of the structure 10, compressive forces are applied to end portions 14a, 14b, 16a, and 16b of the second and third elastic members 14 and 16, directing them towards each other along the left-right direction as shown in Figs. 1 and 2. Simultaneously, tensile forces are applied to end portions 12a and 12b of the first elastic member 12, directing them away from each other along the shown left-right direction. In other words, prestress is applied to the structure 10.

In the second manufacturing method shown in Fig. 5, the first, second, and third elastic members 12, 14, and 16 are first arranged in sequence from the bottom side as follows: the third elastic member 16, the first elastic member 12, and the second elastic member 14, similar to Step S100 (Step S200). Next, while compressing the end portions 14a, 14b, 16a, and 16b of the second and third elastic members 14 and 16 in a direction approaching each other along the left-right direction shown in Fig. 1 and 2, the end portions 12a and 12b of the first elastic member 12 are connected (fixed) to the end portions 14a and 14b of the second elastic member 14, and to the end portions 16a and 16b of the third elastic member 16 (Step S210). As a result, the structure 10 is completed. Even when the structure 10 is manufactured using the second manufacturing method, prestress is applied to the structure 10 in the same manner as when it is manufactured using the first manufacturing method.

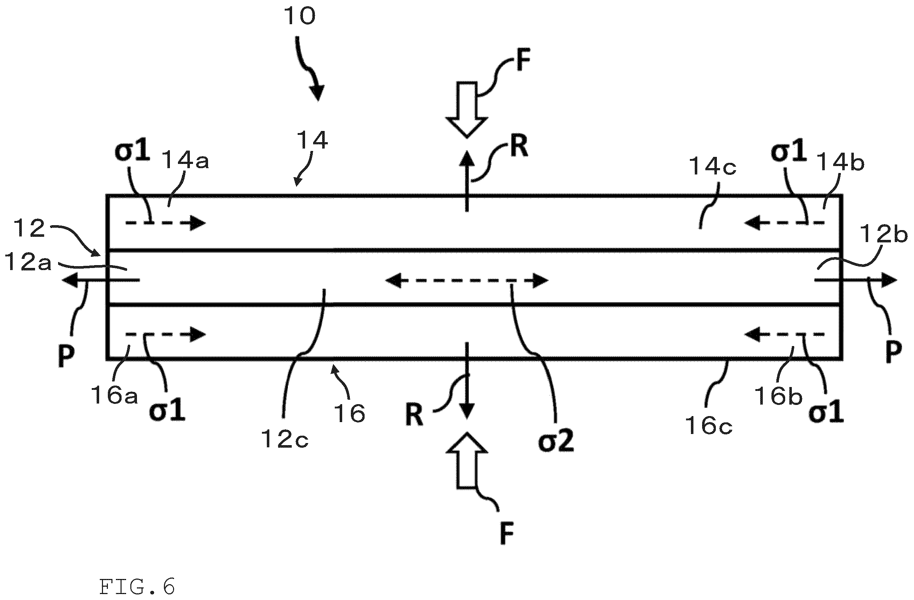

Fig. 6 is a schematic diagram showing the relationship between stresses *σ*1 and *σ*2, and reaction force R, that are generated in the first elastic member 12 and the second and third elastic members 14 and 16 when a pressing force F is applied to the structure 10 shown in Fig. 1 to sandwich the structure 10 from the shown upper and lower directions.

According to the structure 10 of the present embodiment configured as described above, when a pressing force F is applied from the shown upper and lower directions to sandwich the structure 10, the second and third elastic members 14 and 16 deform to expand into a planar shape, and the pressing force F is converted into an axial force acting in the shown left-right direction on the second and third elastic members 14 and 16. At this time, compressive stresses *σ*1 are generated inside the second and third elastic members 14 and 16. Subsequently, the axial forces of the second and third elastic members 14 and 16 are transmitted as tensile forces to the first elastic member 12, which is fixed at the end portions 14a, 14b, 16a, and 16b in the shown left-right direction of the second and third elastic members 14 and 16. At this time, tensile stress *σ*2 is generated inside the first elastic member 12. In this manner, the pressing force F applied to sandwich the structure 10 in the shown up-down direction is converted into a tensile force P that pulls the first elastic member 12 in the shown left-right direction. The structure 10 generates a reaction force R in response to the pressing force F due to the internal stresses of the first elastic member 12 and the second and third elastic members 14 and 16.

Furthermore, in the structure 10 of the present embodiment, compressive forces are pre-applied to the end portions 14a, 14b, 16a, and 16b of the second and third elastic members 14 and 16, directing them towards each other along the shown left-right direction (i.e., prestress is applied to the structure 10). As a result, when a pressing force F is applied to sandwich the structure 10 and the structure 10 deforms to be compressed in the shown up-down direction, the stiffness of the structure 10 (or the reaction force from the structure 10) is ensured to be within a desired range. This allows the curvature of the second and third elastic members 14 and 16 to be increased, thus enabling an increase in the height of the second and third elastic members 14 and 16. As a result, the following effects can be achieved.
(1) The second and third elastic members 14 and 16, with the prestress applied as described above, have increased curvature and greater height compared to when no prestress is applied (where the curvature is smaller and the height is lower). As a result, the second and third elastic members 14 and 16 can exhibit increased stiffness against the above pressing force. (In other words, the second and third elastic members 14 and 16 can generate a greater reaction force against the pressing force).
(2) By applying the prestress as described above to the second and third elastic members 14 and 16, the structure 10 can exhibit a characteristic (flat load-displacement characteristic) that softens the stiffness of the structure 10 as the displacement increases when the second and third elastic members 14 and 16 deform to expand in a planar manner due to the pressing force.
(3) The total amount of strain energy absorbed by the second and third elastic members 14 and 16, as well as the first elastic member 12, can be increased when the second and third elastic members 14 and 16 deform to expand in a planar manner.
(4) Even if the curvature of the second and third elastic members 14 and 16 is increased, resulting in a larger displacement stroke for the second and third elastic members 14 and 16, the maximum compressive stress in the second and third elastic members 14 and 16 can be reduced.
(5) In the absence of the prestress, bending stress and compressive stress are mixed during the deformation of the second and third elastic members 14 and 16 caused by the pressing force F, resulting in a relatively small compressive stress available for tensioning the first elastic member 12. However, when prestress is applied, the bending stress in the second and third elastic members 14 and 16 during their deformation due to the pressing force F becomes minimal, allowing a larger compressive stress to be used for tensioning the first elastic member 12.

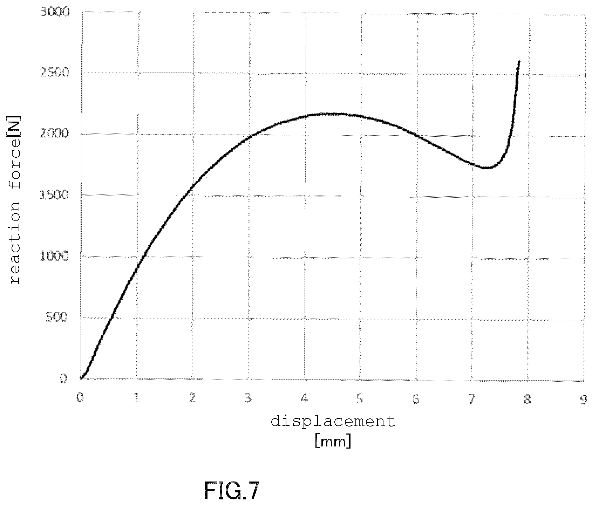

Fig. 7 is a diagram showing the relationship between displacement and reaction force when a pressing force is applied to the structure 10 shown in Fig. 1 to sandwich the structure 10 from the upper and lower directions shown in Figs. 1 and 2. In this embodiment, an analysis was conducted on the structure 10 constructed according to the following material and other conditions. In Fig. 7, the displacement refers to a change in height (length in shown the up-down direction) H (as shown in Fig. 2) of the structure 10 from its fully manufactured state. Regarding displacement, the displacement when the structure 10 is in its fully manufactured state is set to 0, and the maximum displacement (7.8 mm) is defined as the displacement when the second and third elastic members 14 and 16 are flattened, i.e., when the structure 10 is completely collapsed.

### (Materials)

First, second, and third elastic members 12, 14, 16: Structural steel (Young's modulus: 200 GPa, Poisson's ratio: 0.3)

### (Dimensions)

Entire structure 10: Width (left-right direction as shown) 210 mm, depth (paper-plane direction as shown) 100 mm, height (up-down direction as shown) 21.3 mm
Second and third elastic members 14, 16: Thickness 2.0 mm
First elastic member 12: Thickness 1.5 mm

### (Prestress)

Compressive stress in the second and third elastic members 14, 16 due to prestress: 288 MPa
Tensile stress in the first elastic member 12 due to prestress: 60 MPa

As shown in Fig. 7, when the pressing force is applied to the structure 10, the reaction force changes in the following sequence as the second and third elastic members 14 and 16 deform to expand in a planar manner: increase, remain approximately constant, decrease, remain approximately constant, and then increase. Specifically, the reaction force of the structure 10 increases with a gradually decreasing slope within the positive range as the displacement increases from 0 mm to approximately 4.0 mm (softening with positive stiffness). In the region from around 4.0 mm to 5.0 mm, the reaction force remains approximately constant (approaching zero stiffness). In the region from around 5.0 mm to 7.2 mm, the reaction force decreases with a gradually decreasing slope (increasing in absolute value) within the negative range (resulting in negative stiffness). In the region from around 7.2 mm to 7.4 mm, the reaction force remains approximately constant (approaching zero stiffness). Additionally, from around 7.4 mm to the maximum displacement, the reaction force increases with a gradually increasing slope within the positive range (hardening with positive stiffness). These characteristics of the structure 10 are attributed to the prestresses applied to the second and third elastic members 14 and 16, which enhance the stiffness of structure 10, and to the softening of stiffness as displacement increases when the second and third elastic members 14 and 16 deform to expand in a planar manner, an effect brought about by the application of prestress.

In this way, according to the structure 10 of the present embodiment, by converting the pressing force applied to the structure 10 into a tensile force acting on the first elastic member 12, it is possible to store more strain energy. Furthermore, by applying prestress to the second and third elastic members 14 and 16 in advance, it is possible to increase the initial stiffness of the structure 10 (the stiffness when displacement is small) while imparting a characteristic in which the stiffness softens as the displacement increases. This allows for the provision of a structure 10 that generates a relatively high stroke ratio within a limited design space.

Hereinafter, a comparison between the structure 10 of the present embodiment, a structure 10B of a first modification, and a structure 10C of a comparative example will be described. The structure 10 of the present embodiment has the shape shown in Figs. 1 and 2. As described above, in the completed manufacturing state, compressive forces are applied to the end portions 14a, 14b, 16a, and 16b of the second and third elastic members 14 and 16, directing them towards each other along the left-right direction as shown in Figs. 1 and 2. Simultaneously, tensile forces are applied to the end portions 12a and 12b of the first elastic member 12, directing them away from each other along the left-right direction of as shown in Figs. 1 and 2. In other words, prestress is applied to the structure 10. The structure 10B of the first modification has the same shape as the structure 10. However, in the completed manufacturing state, no compressive forces are applied to the end portions 14a, 14b, 16a, and 16b of the second and third elastic members 14 and 16, directing them towards each other along the left-right direction as shown in Figs. 1 and 2. Similarly, no tensile forces are applied to the end portions 12a and 12b of the first elastic member 12, directing them away from each other along the left-right direction as shown in Figs. 1 and 2. In other words, the structure 10 is not prestressed. The structure 10B may be formed by integral molding using composite materials such as metal materials, resin materials, rubber materials, carbon fiber reinforced plastic (CFRP), and the like. Alternatively, the first, second, and third elastic members 12, 14, and 16 may be formed separately and then connected to each other to form the structure 10B. The structure 10C of the comparative example is formed by removing the first elastic member 12 from the structure 10B, with the end portions 14a and 14b of the second elastic member 14 and the end portions 16a and 16b of the third elastic member 16 connected (fixed) to each other. The structure 10C may be formed by integral molding using composite materials such as metal materials, resin materials, rubber materials, carbon fiber reinforced plastic (CFRP), and the like. Alternatively, the second and third elastic members 14 and 16 may be formed separately and then connected to each other to form the structure 10C.

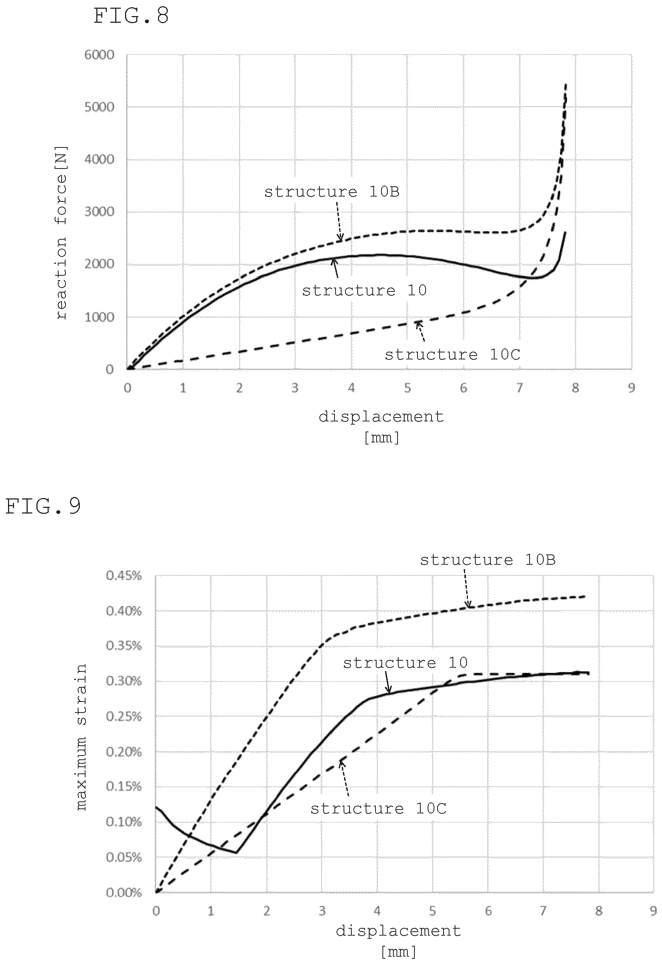

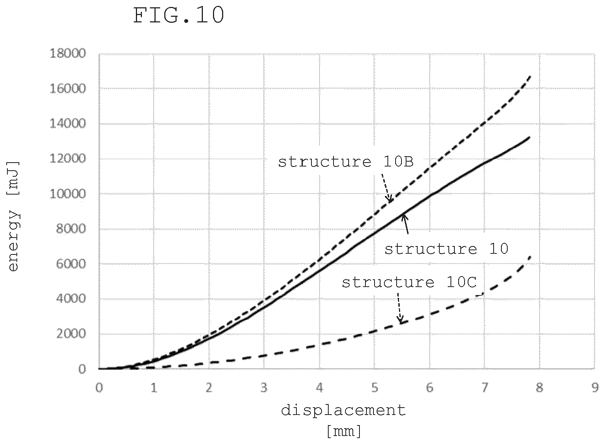

Fig. 8 is a diagram showing the relationship between displacement and reaction force when a pressing force is applied to the structures 10, 10B, and 10C of the present embodiment, the first modification, and the comparative example, respectively, in a manner that sandwiches the structures 10, 10B, and 10C from the upper and lower directions shown in Figs. 1 and 2. Fig. 9 is a diagram showing the relationship between displacement and maximum strain of the structures 10, 10B, and 10C when such a pressing force is applied. Fig. 10 is a diagram showing the relationship between displacement and the energy stored in the structures 10, 10B, and 10C when such a pressing force is applied. In Figs. 8 to 10, the solid line represents the relationship for the structure 10 of the present embodiment, the dotted line represents the relationship for the structure 10B of the first modification, and the dashed line represents the relationship for the structure 10C of the comparative example. It should be noted that the material and other conditions of the structure 10 are the same as the above conditions used in the analysis to obtain the results shown in Fig. 7. Therefore, the relationship of the structure 10 in Fig. 8 (solid line) is the same as that in Fig. 7. The material and other conditions for the structure 10B are the same as those for the structure 10, except for the point where the compressive stress of the second and third elastic members 14 and 16 due to the prestress, and the tensile stress of the first elastic member 12 due to the prestress, are both zero. The material and other conditions for the structure 10C are the same as those for the structure 10B, except for the fact that the overall height of the structure 10C is lower due to the absence of the first elastic member 12. Since prestress is applied to the structure 10, the curvature of the second and third elastic members 14 and 16 in the completed manufacturing state is greater than their initial curvature before the prestress was applied. In contrast, since the structures 10B and 10C are not prestressed, the curvature of the second and third elastic members 14 and 16 in the completed manufacturing state is the same as their initial curvature. That is, the initial curvature of the second and third elastic members 14 and 16 in the structure 10 is smaller than that of the second and third elastic members 14 and 16 in structures 10B and 10C. In Figs. 8 to 10, the definition of displacement and the states of the structures 10, 10B, and 10C when the displacement is zero or at its maximum are the same as those in Fig. 7.

The relationship shown in Fig. 8 will be described. As shown by the dashed line in Fig. 8, the reaction force of the structure 10C increases linearly in the region from 0 mm to around 5.0 mm (approximately constant with positive stiffness). Additionally, in the region from around 5.0 mm to the maximum displacement, the reaction force increases with a gradually steeper slope as the displacement increases (hardening with positive stiffness), and especially in the region near the maximum displacement, it increases sharply. As shown by the dotted line in Fig. 8, the reaction force of the structure 10B increases with a gradually decreasing slope within the positive range as the displacement increases in the region from 0 mm to around 5.0 mm (softening with positive stiffness). In the region from around 5.0 mm to around 7.0 mm, the reaction force becomes approximately constant (approaching zero stiffness). Additionally, in the region from around 7.0 mm to the maximum displacement, the reaction force increases with a gradually increasing slope as the displacement increases (hardening with positive stiffness), and especially in the region near the maximum displacement, it increases sharply. The reaction force of structure 10 shown by the solid line in Fig. 8 has been described above using Fig. 7.

When comparing the structures 10 and 10B with the structure 10C, the reaction force of the structures 10 and 10B increases with a greater slope in the region where the displacement is around 0 to 3.0 mm, that is, they exhibit higher stiffness compared to the structure 10C. Additionally, in the region where the displacement is around 0 to 7.0 mm, the structures 10 and 10B show a larger reaction force than the structure 10C. Furthermore, in the region where the displacement is around 2.0 to 5.0 mm, the relationship between displacement and reaction force for the structure 10C is approximately linear, while the relationship for the structures 10B and 10 is generally nonlinear. These differences are attributed to the presence or absence of the first elastic member 12. Specifically, when a pressing force is applied to sandwich the structures 10, 10B, and 10C, compressive stress occurs in the second and third elastic members 14 and 16 due to the bending deformation of their central portions 14c and 16c, and whether or not tensile stress is generated in the first elastic member 12 results in the observed differences.

When comparing the structure 10 with the structure 10B, the reaction forces are approximately equal to each other in the region where the displacement is around 0 to 3.0 mm. In the region where the displacement is around 3.0 to 7.0 mm, the slope of the reaction force of the structure 10 becomes smaller than that of the structure 10B as the displacement increases (indicating that the stiffness of the structure 10 softens more). Additionally, the reaction force of the structure 10 at the maximum displacement is smaller compared to that of the structure 10B. These differences are attributed to the differences in the initial curvatures of the structures 10 and 10B.

In the structures 10, 10B, and 10C, the sharp increase in reaction force near the maximum displacement is due to the following reason. When a pressing force is applied to sandwich the structures 10, 10B, and 10C using a planar body with significantly higher stiffness and a certain length in the left-right and front-back directions, as shown in Figs. 1 and 2, the contact area between the second and third elastic members 14 and 16 and the planar body is relatively small at low displacements. However, once the displacement reaches a certain value, the contact area between the second and third elastic members 14 and 16 and the planar body increases rapidly, leading to a sharp increase in the reaction force. The degree of this sharp increase in reaction force becomes more pronounced as the initial curvature of the second and third elastic members 14 and 16 increases. Therefore, the sharp increase in reaction force for structure 10 is smaller compared to that of structures 10B and 10C.

The relationship shown in Fig. 9 will be described. As shown by the dashed line shown in Fig. 9, the maximum strain of the second and third elastic members 14 and 16 of the structure 10C increases linearly in the region where the displacement ranges from 0 to around 5.0 mm, and remains approximately constant in the region where the displacement ranges from around 5.0 mm to the maximum value. The behavior of the structure 10C around a displacement of 5.0 mm is as described above. As shown by the dotted line in Fig. 9, the maximum strain of the second and third elastic members 14 and 16 of the structure 10B increases with a gradually diminishing slope as the displacement increases in the region from 0 to around 3.0 mm. In the region from around 3.0 mm to 3.2 mm, the strain increases, accompanied by a sharp decrease in slope. In the region from around 3.2 mm to the maximum value, the strain continues to increase with a gradually diminishing slope. In the structure 10B, the reason why the maximum strain continues to increase gradually even in the region where the displacement ranges from around 3.2 mm to the maximum value is that the second and third elastic members 14 and 16 experience compressive stress via the first elastic member 12. As shown by the solid line shown in Fig. 9, the maximum strain of the second and third elastic members 14 and 16 of the structure 10 has a positive value when the displacement is 0 mm (in the state after manufacturing is completed). This is due to the prestress applied to the structure 10. The maximum strain of the second and third elastic members 14 and 16 of the structure 10 gradually decreases as the displacement increases in the region where the displacement exceeds 0 mm to around 1.5 mm. This is because deformation occurs as the prestress applied to the structure 10 is released. The maximum strain of the second and third elastic members 14 and 16 of the structure 10 increases with a gradually diminishing slope as the displacement increases in the region from around 1.5 mm to 3.7 mm. In the region from around 3.7 mm to 3.9 mm, the strain increases while the slope sharply decreases. In the region from around 3.9 mm to the maximum value, the strain continues to increase with a gradually diminishing slope. This is for the same reason as with the structure 10B.

When comparing the structure 10B and the structure 10C, the maximum strain of the second and third elastic members 14 and 16 in the structure 10B is greater than in the structure 10C. This is due to the presence or absence of the first elastic member 12. That is, when a pressing force is applied to sandwich the structures 10B and 10C, compressive stress is generated in the second and third elastic members 14 and 16 due to the bending deformation of their central portions 14c and 16c. Whether or not tensile stress is generated in the first elastic member 12 also affects this difference. When comparing the structure 10 and the structure 10B, the maximum strain of the second and third elastic members 14 and 16 in the structure 10 is smaller than in the structure 10B in the region from around 0.7 mm to the maximum displacement. This is due to the presence or absence of prestress applied to the structures 10 and 10B.

The relationship shown in Fig. 10 will be described. As shown by the solid line, dashed line, and broken line in Fig. 10, in all of the structures 10, 10B, and 10C, the energy stored in the structure increases as the displacement increases. When comparing the structures 10 and 10B with structure 10C, the structures 10 and 10B store approximately four times more energy than structure 10C when the displacement is around 5 mm. This occurs because, when a pressing force is applied to sandwich the structures 10, 10B, and 10C, the structure 10C stores strain energy due to the bending deformation of the second and third elastic members 14 and 16, while the structures 10 and 10B store strain energy not only due to the bending deformation of the second and third elastic members 14 and 16 but also due to the compressive stress in these members and the tensile stress in the first elastic member 12. When comparing the structure 10 with the structure 10B, the structure 10 stores slightly less energy than the structure 10B. This difference is due to whether prestress is applied to the structures 10 and 10B.

According to the structure 10 and 10B of the present embodiment and the first modification, by providing the first elastic member 12 in addition to the second and third elastic members 14 and 16, when a pressing force is applied to sandwich the structure, compressive stress is generated in the second and third elastic members 14 and 16 due to the bending deformation of the intermediate portions 14c and 16c of the second and third elastic members 14 and 16, and tensile stress is generated in the first elastic member 12. In contrast, the structure 10C does not have the first elastic member 12, so when a pressing force is applied to sandwich the structure, only bending deformation occurs in the intermediate portions 14c and 16c of the second and third elastic members 14 and 16. Therefore, the structures 10 and 10B are capable of storing greater strain energy when a pressing force is applied, compared to the structure 10C (see Fig. 10). In other words, the strain energy that the structure can store can be brought closer to the maximum potential strain energy that the structure can inherently store. Also, the structures 10 and 10B are capable of generating a relatively large reaction force from a relatively small displacement range compared to structure 10C (see Fig. 8).

Furthermore, according to the structure 10 of the present embodiment, by applying prestress, it is possible to impart a characteristic that softens the stiffness more as the displacement increases when a pressing force is applied, compared to the structure 10B in the first modification example (see Fig. 8). In addition, it is possible to suppress the increase in the maximum strain of the second and third elastic members 14 and 16 (see Fig. 9). On the other hand, according to the structure 10B of the first modification, when a pressing force is applied to sandwich the structure, it is possible to increase the strain energy that can be stored compared to the structure 10B of the first modification (see Fig. 10).

Furthermore, according to the structure 10 and 10B of the present embodiment and the first modification, by having the second and third elastic members 14 and 16 form a smooth curve (specifically, a curve made up of multiple arcs) at the prescribed cross-section, it is possible to prevent the formation of parts with excessively high curvature. This helps to suppress the concentration of stress at specific points on the second and third elastic members 14 and 16 when a pressing force is applied to the structure 10.

Furthermore, according to the structure 10 and 10B of the present embodiment and the first modification, by forming the second and third elastic members 14 and 16 in a symmetrical shape relative to the first elastic member 12, when a pressing force is applied to the structure 10 from the top and bottom, it is possible to cause the intermediate portions 14c and 16c of the second and third elastic members 14 and 16 to deform similarly and generate similar compressive stress in the second and third elastic members 14 and 16.

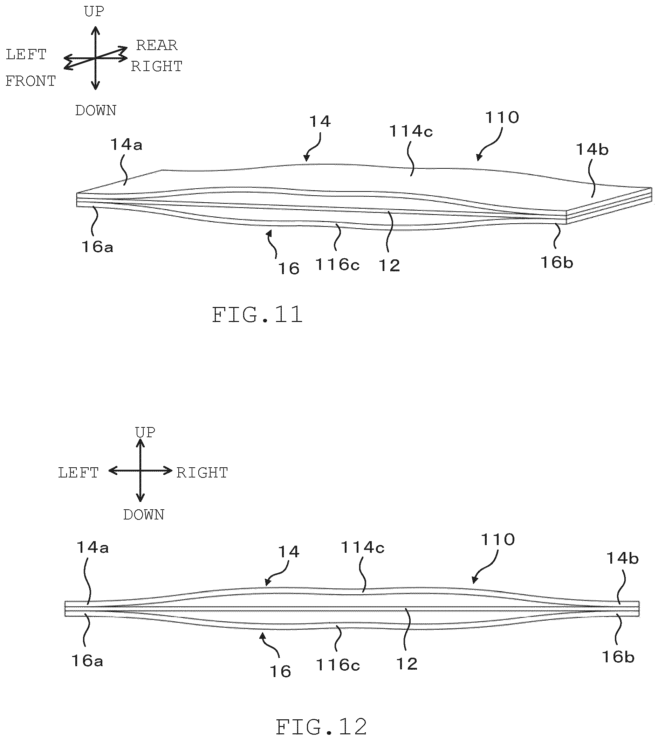

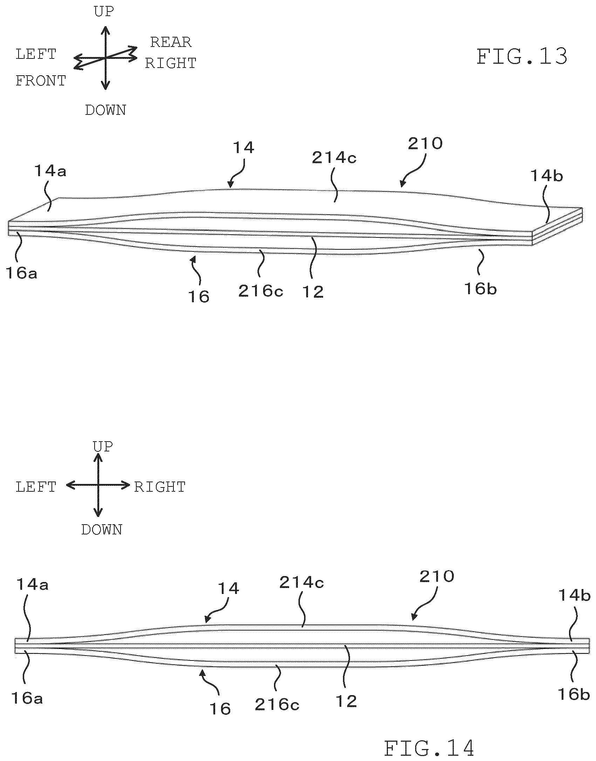

In the structures 10 and 10B of the embodiment and modification described above, as shown in Figs. 1 and 2, the intermediate portions 14c and 16c of the second and third elastic members 14 and 16 each have a shape in which the corners of an inverted V-shape or the corners of a generally V-shape are smoothly rounded (curved) in the predetermined cross-section, i.e., they each have a single convexity on the side away from the first elastic member 12. However, the shape of the intermediate portions 14c and 16c is not limited to this. Fig. 11 is a perspective view showing a structure of a second modification, and Fig. 12 is a front view of the structure shown in Fig. 11. Fig. 13 is a perspective view of a structure of a third modification, and Fig. 14 is a front view of the structure shown in Fig. 13.

As shown in Figs. 11 and 12, the structure 110 of the second modification differs from the structure 10 in that the shape of the intermediate portions 114c and 116c of the second and third elastic members 14 and 16 has been modified compared to the intermediate portions 14c and 16c in the structure 10 of the present embodiment. The intermediate portions 114c and 116c each have a shape in which the corners of an inverted W-shape or the corners of a generally W-shape are smoothly rounded (curved), i.e., they each have two convexities on the side away from the first elastic member 12, spaced apart in the shown left-right direction. By incorporating two convexities in the intermediate portions 114c and 116c, when a pressing force is applied by a flat body with high stiffness and a relatively long plane in the left-right and front-back directions, the structure 110 contacts the flat body at two points on the convexities. This helps suppress the rotation of the structure 110 in a clockwise or counterclockwise direction (as shown in Figure 12), compared to when it contacts the flat body at only one convexity.

As shown in Figs. 13 and 14, the structure 210 of the third modification differs from the structure 110 in that the shape of the intermediate portions 214c and 216c of the second and third elastic members 14 and 16 has been modified compared to the intermediate portions 114c and 116c of the second and third elastic members 14 and 16 in the structure 110. The intermediate portions 214c and 216c have a shape where the two convexities of the intermediate portions 114c and 116c are connected by a straight form (plane) between them.

Even in the structures 110 and 210 of the second and third modification, similar effects to the structure 10 of the embodiment can be achieved in comparison to the comparative example structure 10C.

In the structures 10 and 10B of the embodiment and the first modification described above, as shown in Figs. 1 and 2, the intermediate portions 14c and 16c of the second and third elastic members 14 and 16 have a convex shape formed by combining multiple arcs in the prescribed cross-section. However, the curved shape of the intermediate portions 14c and 16c may be a shape in which part or all of the multiple arcs in the prescribed cross-section are replaced with ellipses, parts of sine waves, or other shapes. Alternatively, the entire set of arcs may be replaced with one period of a sine wave. Also, the intermediate portions 14c and 16c may have a shape in which part of the section contains straight lines.

In the structures 10 and 10B of the embodiment and the first modification described above, as shown in Figs. 1 and 2, the second and third elastic members 14 and 16 have symmetrical shapes with respect to the first elastic member 12. However, the second and third elastic members 14 and 16 do not necessarily have symmetrical shapes with respect to the first elastic member 12. For example, in the structures 10 and 10B, the third elastic member 16 may be replaced by the third elastic member 116 or the third elastic member 216. The same applies to the structures 110 and 210 of the second and third modification.

In the structures 10 and 10B of the embodiment and the first modification described above, as shown in Figs. 1 and 2, the first elastic member 12 is a flat plate-shaped member. However, the first elastic member 12 may, for example, be one or more rod-shaped members.

In the structures 10 and 10B of the embodiment and the first modification described above, the structures include the first elastic member 12 and the second and third elastic members 14 and 16. However, the structure may include the first elastic member 12 and only one of the second and third elastic members 14 and 16.

Through the embodiments and examples disclosed above, the present disclosure has been described; however, the embodiments and examples above do not limit the invention as defined by the claims. Furthermore, forms that combine the features described in the embodiments and examples of the present disclosure may also fall within the technical scope of the present disclosure.

### [note]

A structure according to the present disclosure is a structure, the structure includes: a first elastic member extending along a predetermined direction and having first end portions in the predetermined direction and a first intermediate portion located between the first end portions; and a second elastic member disposed on one surface side of the first elastic member, the second elastic member having second end portions in the predetermined direction, the second end portions being respectively connected to the first end portions, and a second intermediate portion located between the second end portions, with at least part of the second intermediate portion having a convex shape in a direction away from the first intermediate portion. When a pressing force is applied to the structure to bring the second intermediate portion closer to the first intermediate portion, the second elastic member undergoes bending deformation, thereby generating compressive stress in the second elastic member and tensile stress in the first elastic member.

The structure of the present disclosure, when a pressing force is applied to the structure to bring the second intermediate portion closer to the first intermediate portion, the second elastic member undergoes bending deformation, thereby generating compressive stress in the second elastic member and tensile stress in the first elastic member. As a result, the amount of strain energy that can be stored in the structure can be increased. In other words, the strain energy that can be stored in the structure can be brought closer to the maximum potential strain energy that the structure is inherently capable of storing.

[2] In the structure of the present disclosure (the structure described in [1] above), a tensile force in the predetermined direction may be pre-applied to the first end portions, and a compressive force in the predetermined direction may be pre-applied to the second end portions. By doing so, it is possible to suppress an increase in the maximum strain of the second elastic member when the second elastic member deforms under a pressing force that brings the second intermediate portion closer to the first intermediate portion.

[3] In the structure of the present disclosure (the structure described in [1] or [2] above), the second intermediate portion may have the convex shape in a smooth curved shape.

[4] In this case (the structure described in [3] above), the second intermediate portion may have the convex shape formed by a curved shape composed of a combination of multiple arcs.

[5] In the structure of the present disclosure (the structure described in [1] above), the structure further may include: a third elastic member disposed on the other surface side of the first elastic member, the third elastic member having third end portions in the predetermined direction, the third end portions being respectively connected to the first end portions, and a third intermediate portion located between the third end portions, with at least part of the third intermediate portion having a convex shape in a direction away from the first intermediate portion. When a pressing force is applied to the structure to bring the second and third intermediate portions closer to the first intermediate portion, the second and third elastic members may undergo bending deformation thereby generating compressive stresses in the second and third elastic members and tensile stress in the first elastic member.

[6] In the structure of the present disclosure (the structure described in [5] above), a tensile force in the predetermined direction may be pre-applied to the first end portions, and a compressive force in the predetermined direction may be pre-applied to the second and third end portions.

[7] In the structure of the present disclosure (the structure described in [5] or [6] above), the second and third intermediate portions may be symmetrical in shape with respect to the first elastic member.

[8] A first method for manufacturing a structure of the present disclosure is as follows. The structure includes: a first elastic member extending along a predetermined direction and having first end portions in the predetermined direction and a first intermediate portion located between the first end portions; and a second elastic member disposed on one surface side of the first elastic member, the second elastic member having second end portions in the predetermined direction, the second end portions being respectively connected to the first end portions, and a second intermediate portion located between the second end portions, with at least part of the second intermediate portion having a convex shape a convex shape in a direction away from the first intermediate portion. When a pressing force is applied to the structure to bring the second intermediate portion closer to the first intermediate portion, the second elastic member undergoes bending deformation, thereby generating compressive stress in the second elastic member and tensile stress in the first elastic member. The method includes: (A) arranging the first and second elastic members in order; and (B) connecting the first and second end portions while applying tensile force to the first elastic member in the predetermined direction.

By manufacturing the structure using the first method for manufacturing the structure of the present disclosure, a tensile force in the predetermined direction is pre-applied to the first elastic member, while a compressive force in the predetermined direction is pre-applied to the second end portions of the second elastic member. As a result, the same effects as those described in [2] above can be achieved.

[9] A second method for manufacturing a structure of the present disclosure is as follows. The structure includes: a first elastic member extending along a predetermined direction and having first end portions in the predetermined direction and a first intermediate portion located between the first end portions; and a second elastic member disposed on one surface side of the first elastic member, the second elastic member having second end portions in the predetermined direction, the second end portions being respectively connected to the first end portions, and a second intermediate portion located between the second end portions, with at least part of the second intermediate portion having a convex shape in a direction away from the first intermediate portion. When a pressing force is applied to the structure to bring the second intermediate portion closer to the first intermediate portion, the second elastic member undergoes bending deformation, thereby generating compressive stress in the second elastic member and tensile stress in the first elastic member. The method includes: (A) arranging the first and second elastic members in order; and (B) connecting the first and second end portions while compressing the second end portions toward each other along the predetermined direction.

By manufacturing the structure using the second method for manufacturing the structure of the present disclosure, a tensile force in the predetermined direction is pre-applied to the first elastic member, while a compressive force in the predetermined direction is pre-applied to the second end portions of the second elastic member. As a result, the same effects as those described in [2] above can be achieved.

## Claims

1. A structure comprising:
a first elastic member extending along a predetermined direction and having first end portions in the predetermined direction and a first intermediate portion located between the first end portions; and
a second elastic member disposed on one surface side of the first elastic member, the second elastic member having second end portions in the predetermined direction, the second end portions being respectively connected to the first end portions, and a second intermediate portion located between the second end portions, with at least part of the second intermediate portion having a convex shape in a direction away from the first intermediate portion,
wherein, the structure is configured such that, when a pressing force is applied to the structure to bring the second intermediate portion closer to the first intermediate portion, the second elastic member undergoes bending deformation, thereby generating compressive stress in the second elastic member and tensile stress in the first elastic member.

2. The structure according to Claim 1,
wherein a tensile force in the predetermined direction is pre-applied to the first end portions, and
a compressive force in the predetermined direction is pre-applied to the second end portions.

3. The structure according to Claim 1 or 2,
wherein the second intermediate portion has the convex shape in a smooth curved shape.

4. The structure according to Claim 3,
wherein the second intermediate portion has the convex shape formed by a curved shape composed of a combination of multiple arcs.

5. The structure according to Claim 1, further comprising:
a third elastic member disposed on the other surface side of the first elastic member, the third elastic member having third end portions in the predetermined direction, the third end portions being respectively connected to the first end portions, and a third intermediate portion located between the third end portions, with at least part of the third intermediate portion having a convex shape in a direction away from the first intermediate portion,
wherein, the structure is configured such that, when a pressing force is applied to the structure to bring the second and third intermediate portions closer to the first intermediate portion, the second and third elastic members undergo bending deformation thereby generating compressive stresses in the second and third elastic members and tensile stress in the first elastic member.

6. The structure according to Claim 5,
wherein a tensile force in the predetermined direction is pre-applied to the first end portions, and
a compressive force in the predetermined direction is pre-applied to the second and third end portions.

7. The structure according to Claim 5 or 6,
wherein the second and third intermediate portions are symmetrical in shape with respect to the first elastic member.

8. A method for manufacturing a structure comprising: a first elastic member extending along a predetermined direction and having first end portions in the predetermined direction and a first intermediate portion located between the first end portions; and
a second elastic member disposed on one surface side of the first elastic member, the second elastic member having second end portions in the predetermined direction, the second end portions being respectively connected to the first end portions, and a second intermediate portion located between the second end portions, with at least part of the second intermediate portion having a convex shape in a direction away from the first intermediate portion,
wherein, the structure is configured such that, when a pressing force is applied to the structure to bring the second intermediate portion closer to the first intermediate portion, the second elastic member undergoes bending deformation, thereby generating compressive stress in the second elastic member and tensile stress in the first elastic member,
the method comprising:
(A) arranging the first and second elastic members in order; and
(B) connecting the first and second end portions while applying tensile force to the first elastic member in the predetermined direction.

9. A method for manufacturing a structure comprising:
a first elastic member extending along a predetermined direction and having first end portions in the predetermined direction and a first intermediate portion located between the first end portions; and
a second elastic member disposed on one surface side of the first elastic member, the second elastic member having second end portions in the predetermined direction, the second end portions being respectively connected to the first end portions, and a second intermediate portion located between the second end portions, with at least part of the second intermediate portion having a convex shape in a direction away from the first intermediate portion,
wherein, the structure is configured such that, when a pressing force is applied to the structure to bring the second intermediate portion closer to the first intermediate portion, the second elastic member undergoes bending deformation, thereby generating compressive stress in the second elastic member and tensile stress in the first elastic member,
the method comprising:
(A) arranging the first and second elastic members in order; and
(B) connecting the first and second end portions while compressing the second end portions toward each other along the predetermined direction.
